Europäisches Patentamt

(19) European Patent Office

Office européen des brevets

(11) Publication number: **0 033 024**
**A2**

(12) **EUROPEAN PATENT APPLICATION**

(21) Application number: **80300251.8**

(22) Date of filing: **28.01.80**

(51) Int. Cl.³: **G 08 B 13/18**

(43) Date of publication of application:
05.08.81 Bulletin 81/31

(84) Designated Contracting States:
CH. DE

(71) Applicant: **CHLORIDE GROUP LIMITED**
**52 Grosvenor Gardens**
**London SW1W 0AU(GB)**

(72) Inventor: **Green, Robert Leonard**
**96, Sandy Lane**
**Teddington Middlesex(GB)**

(72) Inventor: **Dobbs, Keith**
**40 Landedmans**
**West Houghton, Lancashire(GB)**

(74) Representative: **Arthur, George Fitzgerald et al,**
**KILBURN & STRODE 30, John Street**
**London WC1N 2DD(GB)**

(54) Intruder detector.

(57) This invention is an intruder detector in which there is a range of retro-reflectors (11) spaced apart along a boundary (14, 15) of an area to be protected. There is a scanning transmitter receiver (12) in one corner opposite the boundary (14) and a scanning receiver (13) spaced from the transmitter receiver (12) along another part of the boundary. The two receivers scan the reflectors (11) at different rates and the patterns of received signals are compared in a computer which can detect whether an intruder (18) is present, and possibly also where he is.

FIG.5.

.1.

## INTRUDER DETECTOR

This invention relates to an intruder detector, and one object is to provide such a detector which is capable of responding to any interruption in a plane or slice of space, probably a horizontal plane or slice, but possibly also a vertical plane or slice. For example, the slice within a room can be continuously scanned and the presence of any foreign body detected and recorded so that the point of entry can be recorded for subsequent examination and also the path of any movement about the room. It is also possible to give an alarm signal as soon as an intruder is detected.

According to the present invention, an intruder detector has a series of radiation reflectors spaced apart along a boundary of an area to be protected, a radiation transmitter arranged in a scanning cycle to direct a beam of radiation at each of the reflectors in turn, and a radiation receiver arranged to receive radiation from the series of reflectors and means for distinguishing between the reflections received from the different reflectors.

The reflectors will be radiated with radiation, possibly visible light, or possibly infra-red radiation from suitable means which in a preferred embodiment is positioned at the receiver, or one of the receivers which is thus a transmitter/receiver, and that can be directional in transmission as well as in reception. A second transmitter or receiver could scan the reflectors at a different frequency from that of the first in such a way that the whole

.2.

range of reflectors can be scanned while illuminated from a transmitter.

By noting the positions in a scan where reflections are received in the absence of any intruder and comparing the reflection pattern from time to time, it can be seen if any reflection is lost due to the presence of an intruder, and the position of the intruder can be determined by relating the reflection pattern of the two receivers from the two different points of view centered on the respective receivers.

A possible way of differentiating between a large and a small object ( for example an intruder and a small animal or bird) is to increase the thickness of the protected slice so that it is wider than a specified small object and narrower than a specified large object, i.e. the small object does not produce as significant an effect as the large one does. This can be achieved in several ways. For example; multiple beams or units can be arranged so as to protect several thin slices one above the other, i.e. in the vertical direction when scanning horizontally and vice-versa . Alternatively, a specific width beam can be used.

The invention may be carried into practice in various ways, and certain embodiments will now be described by way of example, with reference to the accompanying drawings; in which

FIGURE 1 is a diagrammatic plan view of an area to be protected showing an intruder detector according to the invention in operation;

FIGURE 2 is a view corresponding to FIGURE 1 showing the situation when an intruder has entered the area;

FIGURE 3 is a view similar to FIGURE 2 but showing how the position of the intruder can be indicated; and

FIGURES 4 and 5 are views corresponding to FIGURE 1 of alternative arrangements.

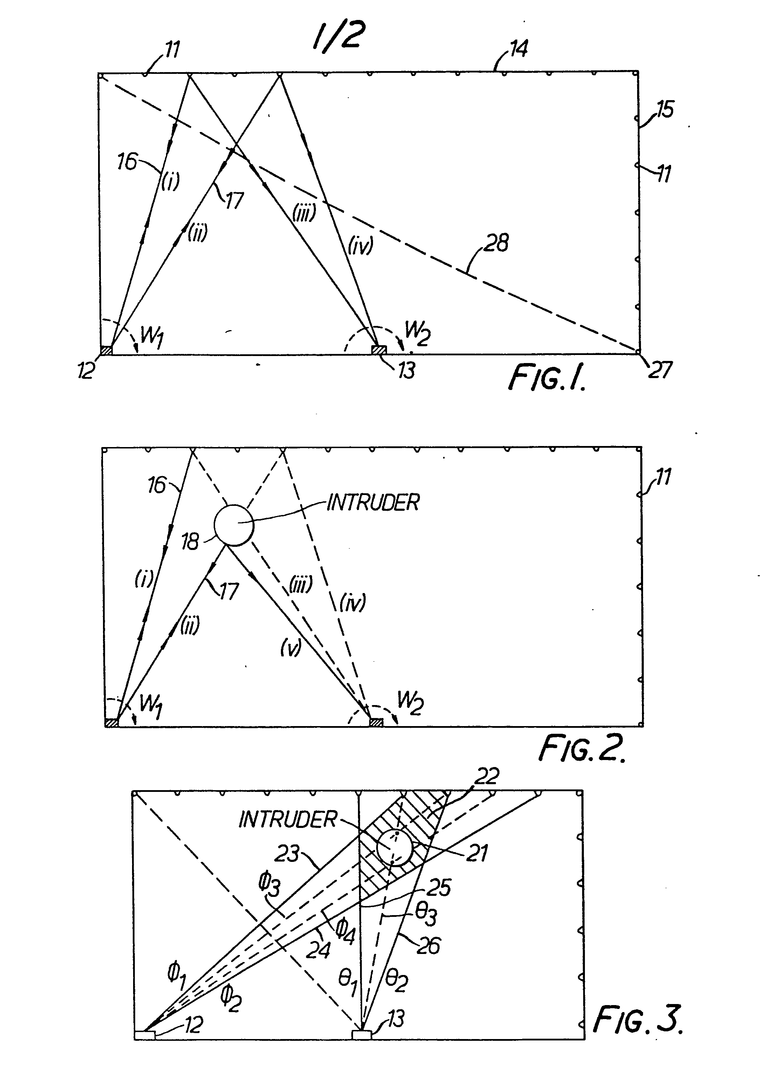

FIGURE 1 shows in plan view a rectangular space to be protected and it will be seen that there are a number of infra-red radiation reflectors 11 spaced apart at set intervals around two adjacent side walls. In the corner opposite to the corner between the adjacent side walls is a directional infra-red radiation transmitter receiver 12 and mid-way along the longer side opposite the boundary containing the reflectors is a directional receiver 13.

The transmitter/receiver 12 transmits continuously or with pulses of fast repetition rate and scans continuously, or in steps, with a $90^{\circ}$ scan embracing the boundary of the area defined by the two adjacent walls 14 and 15. Thus, if there is no intruding object in the space, the signal received at the receiver 12 during a $90^{\circ}$ scan will consist of a series of pulses spaced apart, the third and the fifth pulses in the series corresponding to radiation transmitted and received back along the paths indicated in FIGURE 1 at 16 and 17. If there is an intruder in the area, as shown at 18 in
FIGURE 2, then it follows that the pulse due to the
transmission 16 will not be affected, but that the
pulse corresponding to the transmission 17 will not
appear in the output from the receiver 12 or will
only appear at a very reduced amplitude if there is
some reflection from the intruder of less intensity
than the reflection that would have been received
from the reflector 11.

The receiver 13 also scans the boundary 14, 15
which involves a scan of more than $90^{\circ}$ and almost
$180^{\circ}$ and it scans at a frequency sufficiently
different from the frequency of scan of the transmitter/
receiver 12 that one of the units can complete its
scan while the other is directed at any one of the
reflectors 11, and during a complete scan of the
slower scanning unit the receiver 13 will be able to
look at each of the reflectors 11 while that reflector
is illuminated from the transmitter 12. The output
from the receiver 13 will consist of one pulse
for each of the reflectors 11, and these will be
spread in time over the period of the slower scanning
unit. Once again with reference to FIGURE 2,
it can be seen that an intruder at 18 will
prevent reception of a reflected signal from the
third reflector 11 from the transmission path 16, but
will provide a lower amplitude reflection in response
to the transmission path 17. There will be no large
reflection from the fifth reflector 11 due to the
transmission path 17 because the intruder prevents the radiation reaching that reflector.

A study of the reflection patterns from both units will enable the presence and position of an intruder to be detected.

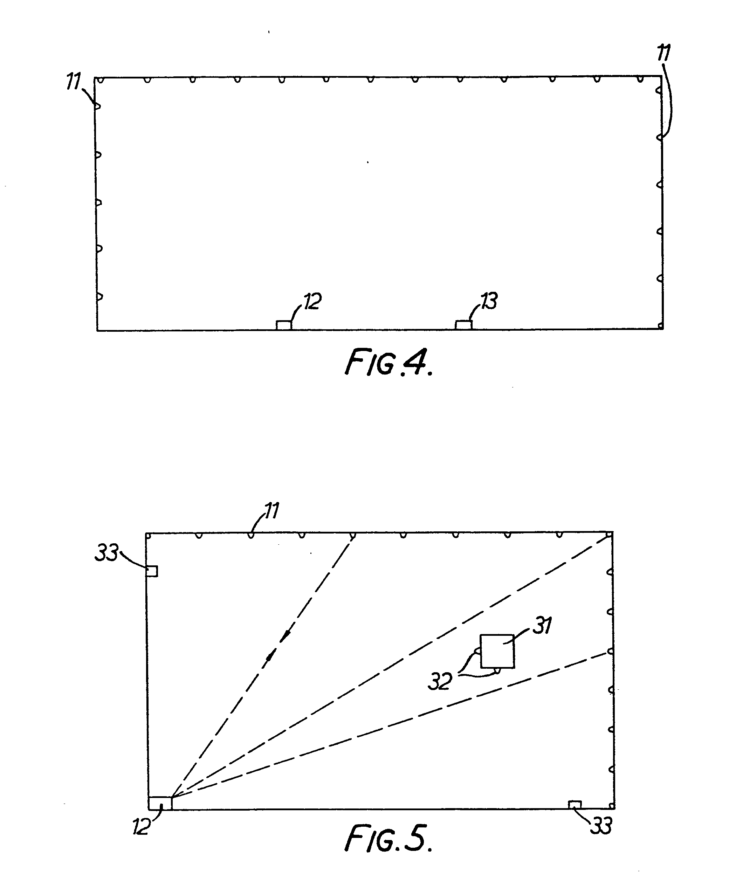

Thus, examination of FIGURE 3 shows that the intruder at 21 must be within the area shown shaded at 22 within lines bounded by transmission paths 23 and 24 from the unit 12 and paths 25 and 26 to the unit 13.

In a modification of the arrangement of FIGURES 1-3 the receiver unit 13 is at the position 27 in FIGURE 1. That is the simplest arrangement, and each unit only requires a 90$^{\circ}$ scan, but a position cannot be accurately defined in the half area on the same side of the diagonal 28 as the transmitter/receiver unit 12.

FIGURE 4 shows the siting of the units and reflectors to give complete position sensing over the whole area. In this case there are reflectors 11 arranged around three sides of the area and the transmitter/receiver unit 12 and the receiver unit 13 are spaced apart in the fourth side, each about one third of the length of that side in from one corner.

The outputs from the two receivers can be compared in a computer to derive information about the presence of an intruder, and that can be recorded so that not only can an alarm be given, but subsequent examination can show where the intruder made his entry.

The spacing of the reflectors 11 can be such that a small animal will not be detected, whereas a human being can be detected.  The computer may be at a central station which can be designed to present a continuous picture of the protected area including an indication of a local area where there is an intruder.

It will be seen that it is impossible for an intruder to pass through the protected plane without interrupting at least one transmission line to each receiver.

The computer or other control arrangements would synchronise the scanning of the two receiver units.

In the embodiment of FIGURE 5 each of the reflectors 11 is a retro-reflector, that is to say a reflector which is arranged to reflect radiation only along the path from which it was received. The reflector may for example have a reflecting stripe consisting of a paint containing glass or plastics spheres.  Then if a single radiation transmitter and receiver, as shown at 12 in the corner opposite the two sides of an area containing the reflectors 11 is arranged to scan through a $90^{\circ}$ scan angle, it will both illuminate and look at each of the retro-reflectors 11 in turn, and if there is an intruder in the area, it will be recognised by the loss or the attenuation of the reflected signal at a particular point in the scanning cycle.  In that way a single transmitter receiver at 12 can be used to survey the whole of the area shown in FIGURE 5, unless there is a pillar or other obstruction such as is shown at 31. Then there could be additional reflectors 32 on the obstruction 31, and the area behind the obstruction could be scanned by one or two additional transmitter receivers as indicated at 33, for example.

As with the previous embodiment, a computer for analysing the reflected signals in relation to the phase of the scanning cycle can provide an indication of the presence of an intruder. Also as with the other embodiments, it should be noted that the speed of scan should be fast enough to detect an intruder dropping through the protected area under gravity so that the complete scan must be completed at least several times in a second.

It is to be noted that a second scanning receiver would be needed if it was desired to determine the position of the intruder and not just the fact that an intruder was present.

The reflectors 11 in this embodiment might be about 1 foot apart, but as they are retro-reflectors they will reflect a maximum amount of energy back towards the transmitter without dissipating energy in other directions. The transmitter angle can be made quite narrow, for example by using for the scan a mirror on a rotating shaft or a mirror on a galvanometer wire, as in some known electrical instruments which arrangement has very little inertia and so can be scanned very quickly. It is also possible to perform the scan by providing an electrical biassing signal to a piezoelectric reflector whose reflecting surface is deformed in accordance with an electrical signal to illuminate the reflectors 11 in turn. Whatever method of scan is used it will of course be controlled by an electrical signal with a known phase so that the computer will know at any time from which direction the reflection is being received. Light from an appropriate source is directed at the mirror.

.9.

CLAIMS

1.   An intruder detector having a series of
radiation reflectors (11) spaced apart along a
boundary (14) of an area to be protected, a
radiation transmitter (12) arranged in a scanning
cycle to direct a beam (16,17) of radiation at
each of the reflectors in turn, and a radiation
receiver (13) arranged to receive radiation from
the series of reflectors, and means for
distinguishing between the reflections received
from the different reflectors.

2.   A detector as claimed in Claim 1 in which the
reflectors are retro-reflectors.

3.   A detector as claimed in any of the preceding
claims in which the transmitter and receiver are
spaced apart along another part of the boundary

4.   A detector as claimed in Claim 1 or Claim 2
in which the transmitter and the receiver are at
the same position to constitute a transmitter/receiver.

5.   A detector as claimed in Claim 4 in which there
is a second receiver spaced from the transmitter/
receiver along another part of the boundary.

6.   A detector as claimed in any of the preceding
claims in which the receiver - or the second receiver -
is arranged to scan the series of radiation reflectors in repeated scanning cycles.

7. A detector as claimed in Claim 6 in which the transmitter and receiver - or second reciver - are arranged to scan the series of radiation relfectors at different scan rates.

8. A detector as claimed in Claim 7 in which one of the transmitter and the receiver - or second receiver - scans all the reflectors while the other is directed at each reflector.

9. A detector as claimed in any preceding claim in which there are two transmitter/receivers.

10. A detector as claimed in any preceding claims in which the distinguishing means comprises a computer fed with the receiver output signals.

0033024

FIG.1.

FIG.2.

FIG.3.

0033024

FIG.4.

FIG.5.